# EUROPÄISCHE PATENTSCHRIFT

(11) **EP 1 386 200 B1**
(45) Veröffentlichungstag und Bekanntmachung des Hinweises auf die Patenterteilung: **02.11.2006**
(21) Anmeldenummer: 02737808.2
(22) Anmeldetag: 19.04.2002
(51) Int. Cl.: G05B 19/042, G06F 12/06

(54) **VERFAHREN UND SYSTEM ZUR LÜCKENLOSEN BELEGUNG VON EIN- UND AUSGABEADRESSEN EINES MODULAREN STEUERSYSTEMS**
METHOD AND SYSTEM FOR THE CONTINUOUS USE OF INPUT AND OUTPUT ADDRESSES IN A MODULAR CONTROL SYSTEM
PROCEDE PERMETTANT DE FAIRE FONCTIONNER UN SYSTEME DE COMMANDE MODULAIRE ET SYSTEME DE COMMANDE FONCTIONNANT SELON CE PROCEDE

(30) Priorität: 20.04.2001 DE 10119622
(43) Veröffentlichungstag der Anmeldung: 04.02.2004
(73) Patentinhaber: SIEMENS AKTIENGESELLSCHAFT, 80333 München (DE)
(72) Erfinder: AUMER, Albert, 92260 Ammerthal (DE); DOMAGOJ, Ilic, 92224 Amberg (DE)
(86) Internationale Anmeldenummer: PCT/DE2002/001456
(87) Internationale Veröffentlichungsnummer: WO 2002/086634

(56) Entgegenhaltungen:
- WO-A-01/15385
- DE-A- 3 640 670
- DE-A- 19 618 821
- DE-A- 19 713 240
- DE-A- 19 733 906
- US-A- 5 675 830

## Beschreibung

Die Erfindung bezieht sich auf ein Verfahren zum Betreiben eines modularen Steuersystems mit einer Zentraleinheit und mit einer Anzahl von mit dieser verbundenen Peripheriebaugruppen. Sie bezieht sich weiter auf ein danach arbeitendes Steuersystem.

Ein derartiges modulares Steuersystem dient zum Steuern von Anlagenteilen innerhalb eines automatisierten, häufig auch komplexen technischen Anlagenprozesses. Hierzu sind üblicherweise eine Zentraleinheit (Master) und eine Anzahl von so genannten Peripheriebaugruppen (Slaves), wie beispielsweise Aktoren, Sensoren oder allgemein Wandler, vorgesehen, die untereinander über ein Bussystem oder Punkt-zu-Punkt-Verbindungen miteinander verbunden sind. Diese Baugruppen, die in der Regel auch die Aufgabe von (Interface-)Slaves übernehmen, dienen zum Austauschen von Betriebsmeldungen und Status- oder Steuerinformationen mit überlagerten Steuerungsaufgaben oder -funktionen innerhalb des vernetzten Steuerungssystems.

Zur Bestimmung der physikalischen Anordnung der einzelnen Baugruppen innerhalb des (speicherprogrammierbaren) Steuerungs- oder Automatisierungssystems ist sowohl der Zentraleinheit als auch jeder Baugruppe ein so genannter Steckplatz mit einer festen Adresse zugeordnet, wobei die jeweilige Steckplatzadresse von der jeweiligen Nummer des Steckplatzes abhängig ist. Sowohl die Zentraleinheit als auch jede Baugruppe ist über diese Steckplatzadresse eindeutig bestimmt.

Zusätzlich zur Steckplatzadresse, die den jeweiligen Steckplatz definiert, hat jede Baugruppe eine Anfangsadresse, die den Platz im logischen Adressraum definiert. Diese Anfangsadresse ist bestimmend für das Ansprechen der Ein- und Ausgänge der jeweiligen Baugruppe durch ein. üblicherweise in der Zentraleinheit hinterlegtes übergeordnetes Anwenderprogramm. Um bestimmte Eingänge zu lesen oder Ausgänge zu beschreiben, muss das Anwenderprogramm auf die vom System vorgegebenen Adressen zugreifen.

Aufgrund dieser festen Steckplatz- und Adressierungsregelung wird durch die jeweilige Baugruppe stets der vollständige Adressbereich eines zugeordneten Steckplatzes unabhängig davon belegt, ob der vollständige Adressbereich auch tatsächlich genutzt wird. Somit geht Adressraum verloren, indem ein Steckplatz mit einer bestimmten Anzahl von Eingängen und/oder Ausgängen von einer Baugruppe mit einer geringeren Anzahl von Eingängen bzw. Ausgängen tatsächlich belegt wird. Dadurch entstehen innerhalb der insbesondere in der Zentraleinheit hinterlegten Adressenliste des Prozessabbildes und damit innerhalb des Prozessabbildes selbst, das stets die aufgrund der vorhandenen Steckplätze maximal belegbaren Eingänge und Ausgänge des Gesamtsystems berücksichtigen muss, immer dann "Lücken", wenn einzelne Baugruppen weniger Eingänge und/oder Ausgänge belegen, als den jeweiligen Steckplätzen zugeordnet sind. Dadurch muss zumindest von der Zentraleinheit regelmäßig ungenutzter Speicherplatz vorgehalten werden, was hinsichtlich des damit verbundenen Aufwandes und der damit verbundenen Kosten uneffektiv und daher äußerst unerwünscht ist.

Diese Art der Zuordnung von Steckplatznummern und Steckplatzadressen einerseits sowie der für das Ansprechen der Eingänge und Ausgänge der einzelnen Baugruppen bestimmenden Anfangsadressen andererseits ist insbesondere bei der Inbetriebnahme oder Initialisierung eines solchen modularen Steuersystems nicht nur äußerst aufwendig, sondern erfordert auch eine genaue Kenntnis des Gesamtsystems. So müssen bei der Inbetriebnahme die vorgegebenen Steckplatzregeln systemspezifisch beachtet und gegebenenfalls auch Hardware-Konfigurationen durchgeführt werden. Dadurch wird das System insgesamt sehr unflexibel oder es muss zusätzlich zur Programmerstellung in aufwendiger Art und Weise eine entsprechende Hardware-Konfiguration erfolgen.

Druckschrift US 5,675,830 zeigt ein modulares Steuersystem mit mehreren Busteilnehmern, wobei die Adressen aller Busteilnehmer in ein Prozessabbild auf einer Zentraleinheit eingetragen werden.

Der Erfindung liegt daher die Aufgabe zugrunde, ein besonders geeignetes Verfahren zum Betreiben eines modularen Steuersystems anzugeben, das insbesondere eine möglichst einfache Inbetriebnahme des Gesamtsystems ermöglicht. Des Weiteren soll ein hierzu besonders geeignetes Steuersystem angegeben werden.

Bezüglich des Verfahrens wird diese Aufgabe erfindungsgemäß gelöst durch die Merkmale des Anspruchs 1. Dazu werden bei einem modularen Steuersystem mit einer Zentraleinheit und mit einer Anzahl von mit dieser verbundenen Peripheriebaugruppen während einer Initialisierungsphase die Eingänge und/oder die Ausgänge sowohl der Zentraleinheit als auch jeder Peripheriebaugruppe lückenlos aufeinander folgend in einem Prozessabbild eingetragen.

In vorteilhafter Ausgestaltung hinterlegt zunächst die Zentraleinheit die durch diese belegten Eingänge bzw. Ausgänge im Prozessabbild. Dies erfolgt zweckmäßigerweise durch Setzen oder Belegen einer der Anzahl der Eingänge bzw. Ausgänge entsprechenden Anzahl von Adressen oder Adressenfeldern innerhalb einer Eingangs- bzw. Ausgangs-Adressenliste des Prozessabbildes. Anschließend gibt die Zentraleinheit dieses Prozessabbild an die benachbarte Peripheriebaugruppe weiter, die daraufhin deren Eingänge bzw. Ausgänge in diesem Prozessabbild hinterlegt. Dies erfolgt wiederum dadurch, dass diese Peripheriebaugruppe die Adressenliste lückenlos mit deren Eingängen bzw. Ausgängen belegt. Diese Peripheriebaugruppe gibt das somit hinsichtlich deren Eingänge bzw. Ausgänge lückenlos erweiterte Prozessabbild an die dieser Baugruppe wiederum benachbarte Peripheriebaugruppe weiter, die wiederum das übergebene Prozessabbild um deren baugruppenspezifischen Eingänge bzw. Ausgänge erweitert.

Dieser Vorgang wird so lange fortgesetzt, bis alle Baugruppen oder Module deren Peripherieausbau in das Prozessabbild eingetragen haben. Dabei erkennt jede Baugruppe bzw. jedes Modul die jeweils belegte Peripherie, d. h. die jeweils belegten Eingänge bzw. Ausgänge, und erweitert lückenlos aufeinander folgend ab dem ersten freien Adressenplatz die mit dem Prozessabbild übergebene Adressenliste. Dazu können eine eingangsspezifische und eine ausgangsspezifische Adressenliste innerhalb eines gemeinsamen Prozessabbildes oder ein eingangsspezifisches und ein ausgangsspezifisches Prozessabbild vorhanden sein.

Bezüglich des modularen Steuersystems wird die genannte Aufgabe erfindungsgemäß gelöst durch die Merkmale des Anspruchs 5. Dazu weist das Steuersystem zumindest eine Zentraleinheit mit einem programmierbaren Speicher und eine Übergabeschnittstelle auf, über die die Zentraleinheit mit einer benachbarten Peripheriebaugruppe kommuniziert. Die oder jede Peripheriebaugruppe weist wiederum einen programmierbaren Speicher und eine Übergabeschnittstelle auf, über die ein an diese Baugruppe übergebenes Prozessabbild an eine benachbarte Baugruppe übergeben wird. Die Übergabe des Prozessabbildes erfolgt, nachdem die jeweilige Baugruppe deren Eingänge bzw. Ausgänge in das übernommene Prozessabbild lückenlos an die bereits belegten Adressenfelder anschließend innerhalb der Adressenliste eingetragen hat.

Die mit der Erfindung erzielten Vorteile bestehen insbesondere darin, dass durch diese lückenlose Adressenvergabe innerhalb des Prozessabbildes eines aus einer Zentraleinheit und einer Anzahl von Peripheriegeräten aufgebauten modularen Steuersystems keine Steckplatzregelungen und keine festen Adressierungsregelungen erforderlich sind. Dadurch sind detaillierte Systemkenntnisse nicht mehr notwendig und es muss auch keine Hardware-Konfiguration mehr durchgeführt werden. Zudem können Peripherieadressen nicht mehr verloren gehen.

Außerdem sind in ein bereits bestehendes System zusätzlich aufzunehmende Baugruppen oder Module mit unterschiedlichem Peripherieausbau rückwirkungsfrei einsetzbar.

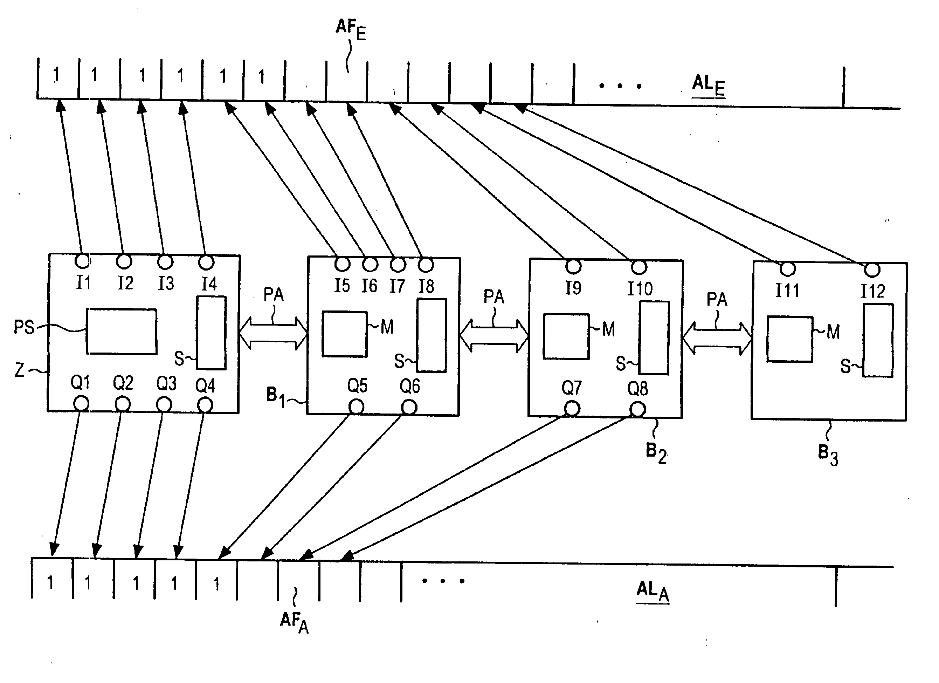

Nachfolgend wird ein Ausführungsbeispiel der Erfindung anhand einer Zeichnung erläutert. Darin zeigt die einzige Figur schematisch in einem Funktions-Blockschaltbild die Adressenvergabe einer Anzahl von Baugruppen eines modularen Steuersystems.

Das modulare Steuersystem umfasst eine Zentraleinheit oder einen Master Z und im Ausführungsbeispiel drei Peripheriebaugruppen B₁ bis B₃. Die Zentraleinheit Z, beispielsweise eine CPU, weist einen programmierbaren Speicher PS und eine Übergabeschnittstelle S auf. Analog weist jede der Baugruppen B₁ bis B₃ eine Übergabeschnittstelle S und einen Speicher M auf, der zweckmäßigerweise ebenfalls programmierbar ist.

Die Baugruppen B₁ bis B₃ können Kommunikationsmodule, Peripheriemodule und/oder Module mit intelligenter Vorverarbeitung zur Bearbeitung von Aktor- oder Sensorsignalen eines technischen Anlagenprozesses innerhalb eines Automatisierungssystems sein.

Bei Inbetriebnahme des Steuersystems hinterlegt die Zentraleinheit Z deren Eingänge I1 bis I4 in einem Prozessabbild PA der Eingänge, nachfolgend als Eingangs-Adressenliste AL_{E} bezeichnet. Außerdem hinterlegt die Zentraleinheit Z deren Ausgänge Q1 bis Q4 in einem Prozessabbild PA der Ausgänge, nachfolgend als Ausgangs-Adressenliste AL_{A} bezeichnet. Diese Belegung ist in der Eingangs-Adressenliste AL_{E} durch Eintragung von jeweils einer "1" in entsprechenden Adressenfeldern AF_{E} für die Eingänge I1 bis I4 veranschaulicht. Analog sind in entsprechenden Adressenfeldern AF_{A} der Ausgangs-Adressenliste AL_{A} die ersten vier Adressenfelder AF_{A} jeweils mit einer "1" belegt.

Die erste angeschlossene Peripheriebaugruppe, d. h. die im Ausführungsbeispiel direkt mit der Zentraleinheit Z verbundene Baugruppe B₁, belegt anschließend mit deren Eingängen 15 bis I8 innerhalb der Eingangs-Adressenliste AL_{E} die nächsten vier Adressenplätze AF_{E}. Analog belegt diese erste Baugruppe B₁ mit deren beiden Ausgängen Q5 und Q6 die nächsten beiden freien Adressenplätze AF_{A} innerhalb der Ausgangs-Adressenliste AL_{A}. Dabei erfolgt innerhalb des durch die Adressenlisten AL_{E} und AL_{A} bestimmten Prozessabbildes PA eine lückenlose Belegung der jeweils freien Adressenplätze AF_{E} bzw. AF_{A} - bezogen auf die Zeichnungs-Darstellung - von links nach rechts.

Analog belegt die nächste angeschlossene Baugruppe, d. h. die im Ausführungsbeispiel mit der ersten Baugruppe B₁ verbundene Baugruppe B₂, mit deren Eingängen I9 und I10 sowie mit deren Ausgängen Q7 und Q8 die nächsten freien Adressenplätze AF_{E} und AF_{A} in der jeweiligen Adressenliste AL₅ bzw. AL_{A}. Die dritte angeschlossene Baugruppe, d. h. die im Ausführungsbeispiel mit der zweiten Baugruppe B₂ verbundene Baugruppe B₃, belegt mit deren Eingängen I11 und I12 wiederum die nächsten freien Adressenplätze AF_{E} innerhalb der Eingangs-Adressenliste AL_{E}. Da diese Baugruppe B₃ keine Ausgänge aufweist, erfolgt keine Belegung der Ausgangs-Adressenliste AL_{A} durch diese Baugruppe B₃.

Diese Belegung der Ein- und Ausgänge In im Prozessabbild PA erfolgt während der Initialisierungsphase, die durch die Zentraleinheit Z nach dem Hochlaufen der Baugruppen B₁ bis B₃ automatisch gestartet wird. Dabei trägt die Zentraleinheit Z die durch diese belegte Peripherie, d. h. deren Eingänge I1 bis I4 und deren Ausgänge Q1 bis Q4, in das Prozessabbild PA ein und übergibt dieses an die erste Baugruppe B₁. Diese Baugruppe B₁ erkennt die belegten Adressenplätze AF_{E} und AF_{A} und somit die bereits belegte Peripherie und trägt wiederum deren Peripherie, d. h. deren Eingänge I5 bis I8 und deren Ausgänge Q5 und Q6, in das Prozessabbild PA ein. Anschließend übergibt diese erste Baugruppe B₁ das entsprechend erweiterte Prozessabbild PA an die nächste Baugruppe B₂ weiter, die wiederum deren Peripherie, d. h. deren Eingänge 19 und I10 sowie deren Ausgänge Q7 und Q8, in das Prozessabbild PA einträgt und dieses an die dritte Baugruppe B₃ übergibt. Dieser Vorgang wird so lange fortgesetzt, bis alle Baugruppen B₁ und alle Baugruppen Bₙ deren Peripherieausbau in das Prozessabbild PA eingetragen haben.

## Patentansprüche

1. Verfahren zum Betreiben eines modularen Steuersystems mit einer mit Eingängen (In) und/oder Ausgängen (Qn) versehenen Zentraleinheit (Z) und mit einer Anzahl von mit dieser Zentraleinheit (Z) verbundenen ebenfalls mit Eingängen (In) und/oder Ausgängen (Qn) versehenen Peripheriebaugruppen (Bₙ), **dadurch gekennzeichnet, dass** während einer Initialisierungsphase
- die Zentraleinheit (Z) ihre Eingänge (In) und/oder ihre Ausgänge (Qn) lückenlos in ein Prozessabbild (PA) einträgt und die Zentraleinheit (Z) das Prozessabbild (PA) an eine benachbarte Peripheriebaugruppe (B₁) weitergibt und
- jede weitere Peripheriebaugruppe (Bₙ) ihre jeweiligen Eingänge (In) und/oder ihre jeweiligen Ausgänge lückenlos in das Prozessabbild (PA) einträgt und an eine weitere benachbarte Peripheriebaugruppe (Bₙ) abgibt.

2. Verfahren nach Anspruch 1, bei dem die Eingänge (In) sowohl der Zentraleinheit (Z) als auch die Eingänge (In) jeder Peripheriebaugruppe (In) in einer eingangsspezifischen Adressenliste (AL_{E}) des Prozessabbildes (PA) eingetragen werden.

3. Verfahren nach Anspruch 1 oder 2, bei dem die Ausgänge (Qn) sowohl der Zentraleinheit (Z) als auch die Ausgänge (Qn) jeder Peripheriebaugruppe (Bₙ) in einer ausgangsspezifischen Adressenliste (AL_{A}) des Prozessabbildes (PA) eingetragen werden.

4. Modulares Steuersystem mit einer speicherprogrammierbaren Zentraleinheit (Z) und mit einer Anzahl von mit dieser verbundenen Peripheriebaugruppen (Bₙ), die jeweils eine übergabeschnittstelle (S) zur Übergabe eines Prozessabbildes (PA) aufweisen, **dadurch gekennzeichnet, dass**
- die Zentraleinheit (Z) ihre Eingänge (In) und/oder ihre Ausgänge (Qn) lückenlos in ein Prozessabbild (PA) einträgt und die Zentraleinheit (Z) das Prozessabbild (PA) über ihre Übergabeschnittstelle (S) an die benachbarte Peripheriebaugruppe (B₁) weitergibt und
- jede weitere Peripheriebaugruppe (Bₙ) ihre jeweiligen Eingänge (In) und/oder ihre jeweiligen Ausgänge lückenlos in das Prozessabbild (PA) einträgt und über ihre Übergabeschnittstelle (S) an die benachbarte Peripheriebaugruppe (Bₙ) abgibt.

## Claims

1. Method for operating a modular control system having a central processing unit (Z) equipped with inputs (In) and/or outputs (Qn) and having a number of input/output modules (Bₙ) connected to this central processing unit (Z) and also equipped with inputs (In) and/or outputs (Qn), **characterized in that** during an initialization phase
- the central processing unit (Z) enters its inputs (In) and/or its outputs (Qn) without a gap in a process image (PA), and the central processing unit (Z) forwards the process image (PA) to an adjacent input/output module (B₁), and
- each additional input/output module (Bₙ) enters its respective inputs (In) and/or its respective outputs without a gap in the process image (PA), and passes it to an additional adjacent input/output module (Bₙ).

2. Method according to Claim 1, in which the inputs (In) of the central processing unit (Z) and also the inputs (In) of each input/output module (Bₙ) are entered in an input-specific address list (AL_{E}) of the process image (PA).

3. Method according to Claim 1 or 2, in which the outputs (Qn) of the central processing unit (Z) and also the outputs (Qn) of each input/output module (Bₙ) are entered in an output-specific address list (AL_{A}) of the process image (PA).

4. Modular control system having a programmable central processing unit (Z) and having a number of input/output units (Bₙ) connected to this central processing unit, each of which has a transfer interface (S) for transferring a process image (PA), **characterized in that**
- the central processing unit (Z) enters its inputs (In) and/or its outputs (Qn) without a gap in a process image (PA), and the central processing unit (Z) forwards the process image (PA) via its transfer interface (S) to the adjacent input/output module (B₁), and
- each additional input/output module (Bₙ) enters its respective inputs (In) and/or its respective outputs without a gap in the process image (PA), and passes it via its transfer interface (S) to the adjacent input/output module (Bₙ).

## Revendications

1. Procédé pour faire fonctionner un système de commande modulaire ayant une unité centrale (Z) munie d'entrées (In) et/ou de sorties (Qn) et un certain nombre de modules périphériques (Bₙ) également munis d'entrées (In) et/ou de sorties (Qn) et reliés à cette unité centrale (Z), **caractérisé par le fait que**, pendant la phase d'initialisation,
- l'unité centrale (Z) enregistre ses entrées (In) et/ou ses sorties (Qn) sans laisser d'espace dans une image de processus (PA) et l'unité centrale (Z) transmet l'image de processus (PA) à un module périphérique voisin (B₁), et
- chaque autre module périphérique (Bₙ) enregistre ses entrées respectives (In) et/ou ses sorties respectives sans laisser d'espace dans l'image de processus (PA) et transmet cette dernière à un autre module périphérique voisin (Bₙ) .

2. Procédé selon la revendication 1, dans lequel les entrées (In) de l'unité centrale (Z) et les entrées (In) de chaque module périphérique (Bn) sont enregistrées dans une liste d'adresses (AL_{E}), spécifique aux entrées, de l'image de processus (PA).

3. Procédé selon la revendication 1 ou 2, dans lequel les sorties (Qn) de l'unité centrale (Z) et les sorties (Qn) de chaque module périphérique (Bₙ) sont enregistrées dans une liste d'adresses (AL_{A}), spécifique aux sorties, de l'image de processus (PA).

4. Système de commande modulaire ayant une unité centrale (Z) programmable en mémoire et un certain nombre de modules périphériques (Bₙ) reliés à celle-ci, qui comportent tous une interface de transmission (S) pour la transmission d'une image de processus (PA), **caractérisé par le fait que**
- l'unité centrale (Z) enregistre ses entrées (In) et/ou ses sorties (Qn) sans laisser d'espace dans une image de processus (PA) et l'unité centrale (Z) transmet l'image de processus (PA) au module périphérique voisin (B₁) par l'intermédiaire de son interface de transmission (S), et
- chaque autre module périphérique (Bₙ) enregistre ses entrées respectives (In) et/ou ses sorties respectives sans laisser d'espace dans l'image de processus (PA) et transmet cette dernière à l'autre module périphérique voisin (Bₙ) par l'intermédiaire de son interface de transmission (S).
